# EUROPÄISCHE PATENTSCHRIFT

(11) **EP 0 249 021 B1**
(45) Veröffentlichungstag und Bekanntmachung des Hinweises auf die Patenterteilung: **04.08.1993**
(21) Anmeldenummer: 87106236.0
(22) Anmeldetag: 29.04.1987
(51) Int. Cl.: B23Q 16/00, B23Q 3/18

(54) **Zentrier- und Spannsystem**
Centring and clamping system
Système de centrage et de serrage

(30) Priorität: 13.06.1986 DE 3619999
(43) Veröffentlichungstag der Anmeldung: 16.12.1987
(73) Patentinhaber: Gebrüder Honsberg GmbH, D-42855 Remscheid (DE)
(72) Erfinder: Kölblin, Rolf, D-8121 Fischen a. Ammersee (DE); Schneider, Reinhard, D-5275 Bergneustadt 2 (DE); Burgtorf, Heinrich, D-5630 Remscheid 11 (DE)
(74) Vertreter: Selting, Günther, Dipl.-Ing.

(56) Entgegenhaltungen:
- DE-B- 1 147 105
- JP-A-56 008 238
- US-A- 3 381 554

## Beschreibung

Die Erfindung betrifft ein Zentrier- und Spannsystem nach dem Oberbegriff des Patentanspruchs 1. Ein solches System ist aus der US-A- 4384811 bekannt.

Beim Betrieb von Werkzeugmaschinen ist es häufig erforderlich, ein wechselbares Teil hochgenau an einem Trägerteil zu befestigen. Beispielsweise muß ein wechselbarer Spindelstock (oder ein anderer Werkzeugkopf) an dem Ständer oder an einem Schlitten der Werkzeugmaschine mit hoher Genauigkeit positioniert werden, damit die Spindel die gewünschte Position einnimmt und das Werkzeug genau in die durch die Maschinensteuerung vorgegebenen Positionen gefahren werden kann. Nicht nur das Werkzeug oder ein das Werkzeug tragender Werkzeugkopf (z.B. Spindelstock) muß in einer exakt definierten Position und Ausrichtung angeordnet werden, sondern auch das zu bearbeitende Werkstück bedarf einer genauen Positionierung. Wenn ein Werkstück auf eine Vorrichtungspalette aufgespannt ist, um auf der Vorrichtungspalette einer Werkzeugmaschine zur Bearbeitung zugeführt zu werden, muß die Vorrichtungspalette sehr genau an der Werkzeugmaschine positioniert werden, damit das Werkzeug die Bearbeitung exakt an der richtigen Stelle des Werkstücks vornimmt.

Die bekannten Zentrier- und Spannsysteme ermöglichen eine lagegenaue Anordnung des wechselbaren Teils in bezug auf das Trägerteil, wobei die Bezugsachsen von Trägerteil und wechselbarem Teil zusammenfallen.

Schwierigkeiten ergeben sich jedoch wenn die einzelnen Baugruppen der Werkzeugmaschine unterschiedlichen Temperaturen ausgesetzt sind. Wenn eine Werkzeugmaschine morgens in einer kalten Halle eingerichtet wird und wenn im Laufe des Tages die Temperatur steigt, dann verändern sich die Bedingungen, unter denen die Zentrierung ursprünglich vorgenommen wurde. Dies bedeutet beispielsweise, daß die Spindel eines wechselbaren Spindelstocks in bezug auf die Werkzeugmaschine nicht mehr genau diejenige Lage-Position einnimmt, die sie ursprünglich hatte und an der das Maschinenprogramm orientiert ist.

Es ist bekannt, das wechselbare Teil an einem Ende nach Art eines Festlagers (mit Rundbolzen) mit dem Trägerteil zu verbinden und das gegenüberliegende Ende als verschiebbares Loslager (mit Schwertbolzen) auszubilden, so daß das wechselbare Teil sich ungehindert thermisch in der Länge verändern kann. In diesem Fall bleibt nur diejenige Stelle des wechselbaren Teils, an der sich das Festlager befindet, unverändert in bezug auf das Trägerteil. Da das Festlager aber nicht in der Bezugsachse angebracht werden kann, wo sich bei einem Spindelstock beispielsweise die Spindel befindet, hat die Bezugsachse (z.B. Spindelachse) stets einen Abstand von dem Festlager. Dadurch ergeben sich thermisch bedingte Lageveränderungen der Bezugsachsen der beiden Teile relativ zueinander.

Aus US-A- 4 384 811 ist eine Fräsmaschine mit auswechselbarem Spindelkopf bekannt, bei der der Maschinenkörper vier Befestigungsstücke aufweist, die an ihren Enden mit Nuten versehen sind, in die an der Rückfläche des Spindelkopfes vorgesehene Ausrichtnasen eingreifen. Die Befestigungsstücke sind generell entlang der Achsen eines Achsenkreuzes angeordnet, welche sich auf der Spindelachse kreuzen. Die Befestigungsstücke sind entlang schräger Bahnen verschiebbar, so daß der Anstellwinkel des Fräswerkzeuges durch gesteuertes Bewegen der Befestigungsstücke verändert werden kann. Feste Führungsflächen sind an dem Trägerteil nicht vorgesehen, so daß kein hochgenaues Ausrichten des wechselbaren Teiles in bezug auf das Trägerteil möglich ist.

Der Erfindung liegt die Aufgabe zugrunde, ein Zentrier- und Spannsystem der eingangs genannten Art zu schaffen, bei dem sichergestellt ist, daß die Bezugsachsen der beiden Teile auch im Falle thermischer Längenänderungen des einen Teiles sich nicht gegeneinander verschieben, so daß eine hochgenaue Ausrichtung der beiden Bezugsachsen relativ zueinander nicht nur eingestellt, sondern bei unterschiedlichen Betriebsverhältnissen auch aufrechterhalten werden kann.

Die Lösung dieser Aufgabe erfolgt erfindungsgemäß mit den Merkmalen des Patentanspruchs 1.

Nach der Erfindung hat jedes Anlage- und Führungselement eine ebene Führungsfläche, an der das zugehörige Zentrierelement gleiten kann. Die Führungsflächen sind entlang der Achsen eines Achsenkreuzes angeordnet, dessen Mittelpunkt auf der Bezugsachse des Trägerteils liegt. Dadurch wird erreicht, daß das wechselbare Teil sich in allen Richtungen ausdehnen bzw. zusammenziehen kann, ohne daß sich die Lage seiner Bezugsachse verändert. Nach der Erfindung sind alle Lager, mit denen das wechselbare Teil an dem Trägerteil zentriert ist, Loslager, die eine Bewegung entlang einer der Achsen des Achsenkreuzes zulassen, in Querrichtung zu dieser Achse jedoch eine Fixierung bzw. Zentrierung bewirken. Sämtliche Lager können im Abstand von den beiden (zusammenfallenden) Bezugsachsen (Achsenmitten) angeordnet sein, so daß eine Spindel oder ein anderes Bauteil, das entlang der Bezugsachse angeordnet ist, durch kein Lager bzw. Anlage-Führungselement behindert wird. Der einzige ortsfeste Punkt des wechselbaren Teils liegt auf der Bezugsachse dieses Teils, obwohl an diesem Punkt keine feste Verbindung mit dem Trägerteil vorhanden ist und alle Lager und Anlageflächen sich im Abstand von diesem Punkt befinden. Damit ist es möglich, einen örtlich invariablen Punkt zu definieren, der bei allen Temperaturen seine Position beibehält, ohne daß es erforderlich wäre, an diesem Punkt (entlang der Bezugsachse, z.B. im Zentrum der Spindel) eine der für die Zentrierung erforderlichen Komponenten anzuordnen. Das aus dem Trägerteil ausfahrbare Andrückelement wirkt mit einer Schrägfläche auf das Zentrierelement des wechselbaren Teiles ein und drückt dieses Zentrierelement in Richtung auf die Führungsfläche. Dadurch wird eine definierte Anlage des Zentrierelementes des wechselbaren Teiles an der Führungsfläche des Trägerteils erreicht und das wechselbare Teil wird hochgenau und spielfrei auf die Achsen des Achsenkreuzes ausgerichtet.

Das erfindungsgemäße Zentrier- und Spannsystem eignet sich insbesondere für die Befestigung eines Spindelstocks oder eines anderen Werkzeug- oder Bearbeitungskopfes an einer Werkzeugmaschine sowie für die Festlegung von Vorrichtungspaletten, die Werkstücke o.dgl. tragen, an einer entsprechenden Basis. Bei derartigen Anwendungen in Verbindung mit nummerisch gesteuerten Werkzeugmaschinen, die entlang mehrerer Achsen bewegbar sind, wird eine hochgenaue Arbeitsweise unabhängig von Temperaturschwankungen und örtlichen Dehnungen einzelner Komponenten ermöglicht.

Vorteilhafte Ausgestaltungen und Weiterbildungen der Erfindung ergeben sich aus den Unteransprüchen.

Im folgenden werden unter Bezugnahme auf die Zeichnungen Ausführungsbeispiele der Erfindung näher erläutert.

Es zeigen:
Fig. 1 eine schematische perspektivische Ansicht einer Werkzeugmaschine,
Fig. 2 einen Schnitt entlang der Linie II-II von Fig. 1, also entlang der Anlageebene der beiden relativ zueinander fixierbaren Teile, wobei das wechselbare Teil abgenommen ist,
Fig. 3 einen Schnitt entlang der Linie III-III von Fig. 2,
Fig. 4 eine schematische perspektivische Darstellung des Zusammenwirkens eines Zentrierelementes mit einem Anlage- und Führungselement und einem Andrückelement und
Fig. 5 eine schematische Darstellung eines Ausführungsbeispiels.

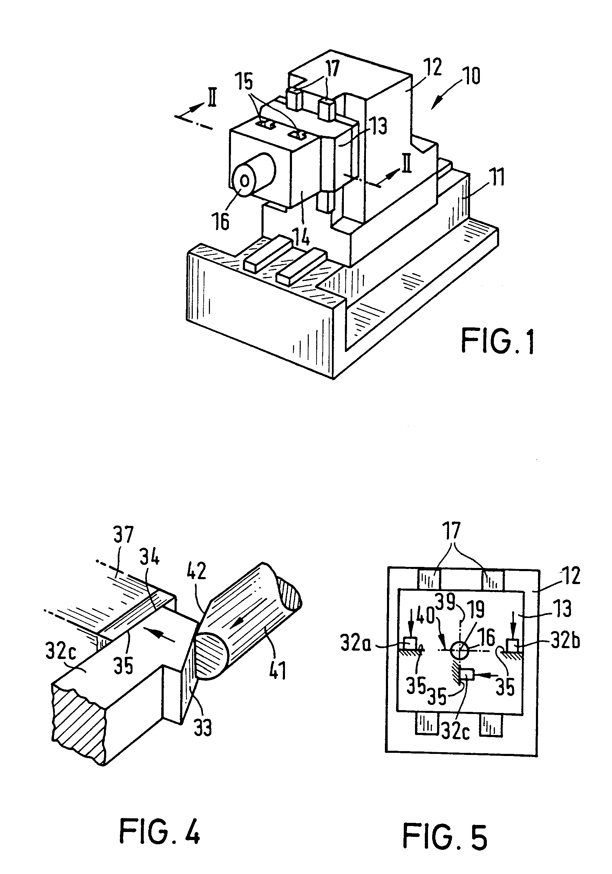

In Figur 1 ist eine Werkzeugmaschine 10 dargestellt, die einen auf einem Maschinenbett 11 horizontal verfahrbaren Ständer 12 aufweist. An der Vorderseite des Ständers 12 ist das Trägerteil 13 angebracht, das an vertikalen Führungsleisten 17 verfahrbar ist. An der Vorderseite des Trägerteils 13 ist das wechselbare Teil 14, im vorliegenden Fall ein Spindelkopf, befestigt. Das Teil 14 weist an seiner Rückseite T-förmige vertikale Führungsnuten 15 auf, in die Spannelemente des Trägerteils 13 hineinragen. Wenn das wechselbare Teil 14 von dem Trägerteil 13 entfernt werden soll, werden die Spannelemente gelöst, so daß das Teil 14 durch vertikale Bewegung nach oben von dem Trägerteil 13 entfernt werden kann. Andererseits kann ein neues Teil 14 mit seinen Nuten 15 von oben her vor das Trägerteil 13 geschoben werden, wobei die Spannelemente des Trägerteils 13 in die vertikalen Nuten 15 eingreifen. Von der Vorderseite des wechselbaren Teils 14 steht die drehbare Spindel 16 nach vorne ab.

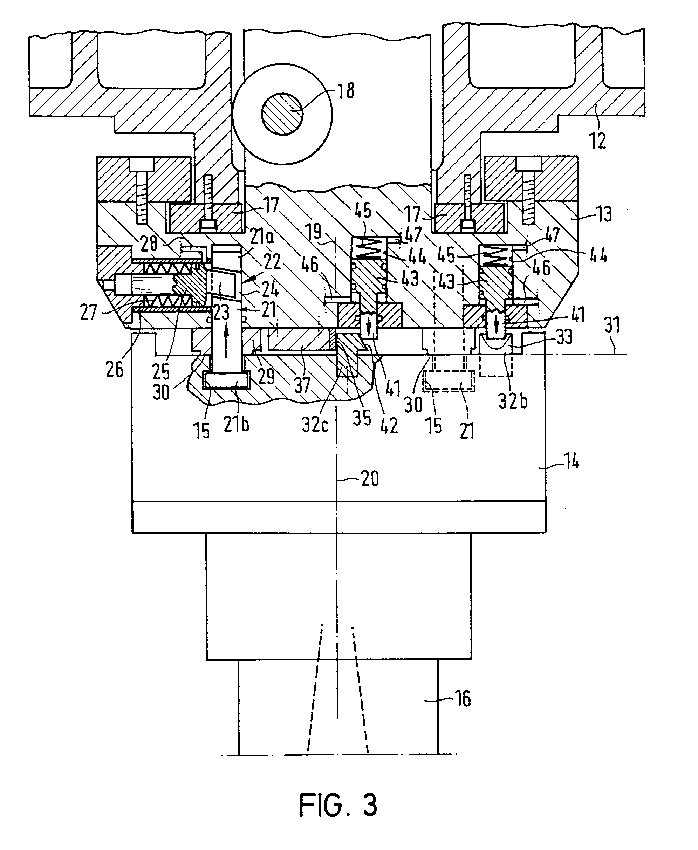

Der Ständer 12 enthält eine (nicht dargestellte) Antriebsvorrichtung für die Spindel 16. Die Welle 18 dieser Antriebsvorrichtung verläuft vertikal im Inneren des Ständers 12 und sie ist mit einer horizontalen Welle gekuppelt, die sich durch das Innere des Trägerteils 13 erstreckt und mit der die Spindel 16 verbunden wird, wenn das wechselbare Teil 14 mit dem Trägerteil 13 verbunden ist. Die Spindelantriebswelle verläuft im Teil 13 entlang der Bezugsachse 19 dieses Teils (Figur 3). Die Bezugsachse 20 des wechselbaren Teils 14 ist die Spindelachse. Bei ordnungsgemäßer Ausrichtung der beiden Teile 13 und 14 fallen die beiden Bezugsachsen 19 und 20 zusammen.

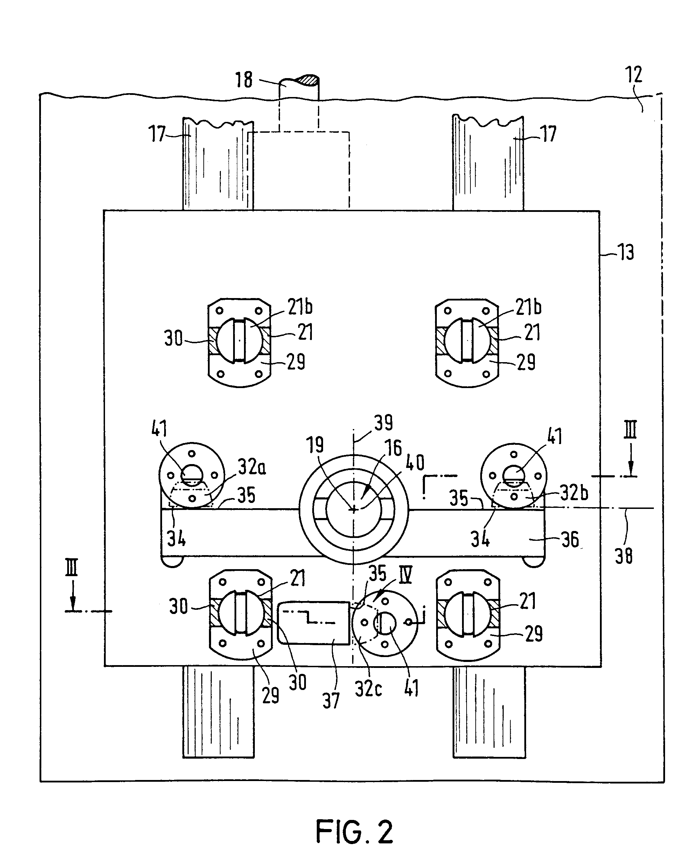

Das Trägerteil 13 weist vier Spannelemente 21 auf, die jeweils aus einem in dem Trägerteil 13 horizontal verschiebbaren Schaft 21a und einem am äußeren Schaftende vorgesehenen breiteren Kopf 21b bestehen. Das äußere Ende des Schaftes 21a und der Kopf 21b sind so ausgebildet und bemessen, daß sie in die T-förmigen Nuten 15 hineinpassen. Die Spannvorrichtung zum Zurückziehen eines Spannelementes 21 ist in Figur 3 dargestellt. Diese Spannvorrichtung besteht aus einem Keilgetriebe 22, bei dem ein schräger Schieber 23 in eine schräge Quernut 24 des Schafts 21a eintaucht. Der Schieber 23 ist an einem Kolben 25 befestigt, der in einem quer zum Schaft 21a verlaufenden Zylinder 26 verschiebbar ist. Der Zylinder 26 enthält eine Feder 27, die den Kolben 25 in Richtung auf den Schaft 21a drückt, wodurch der Schaft in seine Rückzugsposition (bezogen auf das Teil 14) gedrückt wird. Zum Lösen des Spannelements 21 wird das der Feder 27 abgewandte Ende des Kolbens 25 über Leitung 28 mit Druck beaufschlagt, so daß der Kolben 25 entgegen der Wirkung der Feder 27 zurückgedrückt wird; hierdurch wird das Spannelement 21 zum Lösen des Teils 14 aus dem Trägerteil 13 herausgedrückt. Infolge der Feder 27 bleibt die Spannung auch bei Druckausfall erhalten. Alle vier Spannelemente 21, die gemäß Figur 2 nach Art eines Rechtecks angeordnet sind, werden synchron gesteuert.

Der Schaft 21a eines jedes Spannelements 21 ragt durch die Öffnung eines Blocks 29 hindurch, der an der Vorderseite des Trägerteils 13 befestigt ist. Jeder Block 29 weist an seiner Vorderseite zwei vorstehende fein bearbeitete Anlageflächen 30 auf, an denen das Teil 14 zur Anlage kommt und gegen die das Teil 14 von den Spannelementen 21 gezogen wird. Sämtliche Anlageflächen 30 liegen in einer gemeinsamen vertikalen Ebene, die als Anlageebene 31 bezeichnet wird. In der Anlageebene 31 stößt die rückwärtige Wand des wechselbaren Teils 14 gegen die insgesamt acht Anlageflächen 30.

Von der rückwärtigen Wand des wechselbaren Teils 14 stehen drei Zentrierelemente 32a, 32b und 32c ab. Jedes Zentrierelement ist an dem Teil 14 fest angebracht und es weist eine Schrägfläche 33 und dieser gegenüber eine rechtwinklig zur Anlageebene 31 verlaufende ebene Anlagefläche 34 auf. Die Anlagefläche 34 verläuft jeweils parallel zu einer Führungsfläche 35 eines an der Vorderwand des Trägerteils befestigten Führungselementes 36 bzw. 37. Wie Figur 2 zeigt, ist für die beiden Zentrierelemente 32a und 32b ein gemeinsames Führungselement 36 in Form eines horizontalen Balkens vorgesehen, an dessen Oberseite die horizontalen Führungsflächen 35 angeordnet sind. Diese horizontalen Führungsflächen 35 verlaufen exakt in der Höhe der horizontalen Achse 38 des Achsenkreuzes 40, dessen Mittelpunkt auf der Bezugsachse 19 bzw. der Achse der Spindel 16 liegt. Auf der vertikalen Achse 39 des Achsenkreuzes 40 liegt die vertikale Führungsfläche 35 des Führungselementes 37.

Jeder Führungsfläche 35 ist ein zapfenförmiges Andrückelement 41 zugeordnet, das in dem Trägerteil 13 parallel zur Bezugsachse 19 verschiebbar angeordnet ist und dessen vorderes Ende aus dem Trägerteil 13 herausragt. Das Andrückteil 41 ist mit einer Schrägfläche 42 versehen, die parallel zur Schrägfläche 33 des zugehörigen Zentrierelementes ausgerichtet ist. Wenn das Teil 14 an dem Trägerteil 13 angebracht ist, ragt der Kopf eines jeden Zentrierelementes in den Spalt zwischen der zugehörigen Führungsfläche 35 und der Schrägfläche 42 hinein. Wenn das Andrückelement 41 aus dem Trägerteil 13 herausbewegt wird, wird das Zentrierelement 32 durch die Schrägflächen 42 und 33 gegen die Führungsfläche 35 gedrückt.

Wie Figur 2 zeigt, sind die Spalte zwischen Andrückelement 41 und Führungselement 36 bei den Zentrierelementen 32a und 32b vertikal, so daß die genannten Zentrierelemente mit ihrer horizontalen Anlagefläche 34 vertikal nach unten gegen die horizontalen Führungsflächen 35 gedrückt werden. Dagegen wird das Zentrierelement 32c mit seiner Anlagefläche horizontal gegen die vertikale Führungsfläche 35 des Führungselements 37 gedrückt. Auf diese Weise werden die Bezugsachsen 19 und 20 relativ zueinander ausgerichtet, wobei die drei Zentriervorrichtungen im Abstand von der Spindel 16 angeordnet sind.

Jedes zapfenförmige Andrückelement 41 ist mit einem Kolben 43 verbunden, der in einem Zylinder 44 des Trägerteils 13 bewegbar ist und durch Druck in der Leitung 47, unterstützt von einer Feder 45, nach außen (also in die Zentrierposition) gedrückt wird. Durch Druck in einer Leitung 46 kann der Kolben 43 unter Zusammendrückung der Feder 45 zurückgedrängt werden, um die Zentrierung freizugeben. Durch die Feder 45 wird erreicht, daß das Teil 14 auch bei Druckausfall unverrückbar in Position bleibt.

Zum Zentrieren und Spannen des Teils 14 an dem Trägerteil 13 wird das Teil 14 mit der T-förmigen Nut 15 vertikal über die Köpfe der Spannelemente 21 geschoben. Dann erfolgt die seitliche Zentrierung durch Ausfahren des unteren Andrückelementes, das mit dem Zentrierelement 32c zusammenwirkt. Danach wird die vertikale Zentrierung durch Betätigung der beiden Andrückelemente 41 ausgeführt, die mit den Zentrierelementen 32a und 32b zusammenwirken. Wenn auf diese Weise die Bezugsachsen 19 und 20 in Übereinstimmung gebracht sind, werden die vier Spannelemente 21 gleichzeitig in das Trägerteil 13 eingezogen, so daß die Verspannung und Verriegelung des wechselbaren Teils 14 an dem Trägerteil 13 erfolgt.

Bei unbeabsichtigtem Öffnen, der Verriegelung, z.B. infolge von Fehlschaltung, kann das Teil 14 nicht herunterfallen, da es in den T-Nuten 15 gehalten wird und auf den Führungsflächen mit den Zentrierelementen 32a und 32b aufliegt.

Bei etwaigen Längenänderungen des wechselbaren Teils 14 in bezug auf das Trägerteil 13 infolge örtlicher Temperaturdifferenzen bleibt die Übereinstimmung der Bezugsachsen 19 und 20 erhalten.

Die Stellung der Kolben 25 bzw. der Kolben 43 kann durch hydraulische oder pneumatische Kontrollkanäle überwacht werden, die nur bei bestimmten Kolbenstellungen durchströmt werden. Auf diese Weise sind Rückmeldungen möglich, ob die Spannelemente 21 bzw. die Kolben 43 tatsächlich die Arbeitsposition einnehmen.

Ferner können an den Anlageflächen 30 und 35 Düsenbohrungen vorgesehen sein, an denen Druckluft austritt, um einerseits die Anlageflächen von Ablagerungen zu reinigen und um andererseits über Drucksensoren festzustellen, ob sich das Teil 14 in der spannbaren Position befindet, in der es die Düsenbohrungen verschließt.

Schließlich können an den Köpfen 21b der Spannelemente 21 Rollen angebracht sein, um beim Einfahren und beim Lösen des Teils 14 die Reibungsverluste zu verringern und Verschleiß an den Anlageflächen 30 zu vermeiden.

Figur 5 zeigt in vereinfachter Form die Anordnung der drei Führungsflächen 35 an der Vorderseite des Trägerteils 13. Die zusätzlich eingezeichneten Zentrierelemente 32a, 32b und 32c sind nicht am Trägerteil 13, sondern an dem (im übrigen nicht dargestellten) wechselbaren Teil befestigt. Die Pfeile geben die Wirkungsrichtungen der zugehörigen Andrückelemente an. Während die beiden seitlichen Zentrierstellen, mit denen die vertikale Zentrierung vorgenommen wird, größere Abstände von dem Mittelpunkt des Achsenkreuzes 40 haben, ist der Abstand der unteren Zentrierstelle, die die horizontale Zentrierung vornimmt, geringer. Diese untere Zentrierstelle kann nahe am Achsenkreuz angeordnet sein und sogar im Achsenkreuz liegen, wenn die baulichen Verhältnisse dies zulassen. Es ist auch möglich, anstelle der einen horizontalen Zentrierstelle zwei solcher Zentrierstellen entlang der vertikalen Achse 39 vorzusehen.

## Patentansprüche

1. Zentrier- und Spannsystem für Werkzeugmaschinen zum Zentrieren und Festspannen eines wechselbaren Teils (14) in Form eines Werkzeug- oder Bearbeitungskopfes oder einer Werkstückpalette an einem Trägerteil (13), mit
- mehreren an dem Trägerteil (13) vorgesehenen Spannelementen (21) zum Ziehen des wechselbaren Teils (14) gegen das Trägerteil (13),
- mehreren an dem Trägerteil (13) vorgesehen Anlageflächen (30) zum Abstützen des wechselbaren Teils (14), und
- an dem wechselbaren Teil (14) vorgesehenen Zentrierelementen (32a,32b,32c) , die mit ebenen Führungsflächen (35) von Führungselementen (36,37) des Trägerteils (13) zusammenwirken und das wechselbare Teil (14) in der Anlageebene (31) beider Teile in zwei zueinander rechtwinkligen Richtungen so positionieren, daß eine Bezugsachse (20) des wechselbaren Teils (14) mit einer Bezugsachse (19) des Trägerteils (13) zusammenfällt,
**dadurch gekennzeichnet,**
daß die Führungselemente (36,37) jeweils eine einzige Führungsfläche (35) aufweisen und die Führungsflächen (35) entlang eines Achsenkreuzes (40) angeordnet sind, dessen Mittelpunkt auf der Bezugsachse (19) des Trägerteils (13) liegt, und
daß zu jedem Führungselement (36,37) ein rechtwinklig zur Anlageebene (31) aus dem Trägerteil (13) ausfahrbares Andrückelement (41) vorgesehen ist, das über eine Schrägfläche (33) auf das Zentrierelement (32a,32b,32c) einwirkt und dieses gegen die Führungsfläche (35) drückt.

2. Zentrier- und Spannsystem nach Anspruch 1, dadurch gekennzeichnet, daß entlang der einen Achse (38) des Achsenkreuzes (40) zwei Zentrierelemente (32a,32b) und entlang der anderen Achse (39) ein einziges Zentrierelement (32c) angeordnet sind.

3. Zentrier- und Spannsystem nach Anspruch 1 oder 2, dadurch gekennzeichnet, daß die Spannelemente (21) federnd in Spannrichtung vorgespannt sind und daß jeweils eine druckbetriebene Betätigungsvorrichtung (22,23,25) zum Lösen des Spannzustandes vorgesehen ist.

4. Zentrier- und Spannsystem nach einem der Ansprüche 1 bis 3, dadurch gekennzeichnet, daß die Andrückelemente (41) hydraulisch durch Federn unterstützt, aus dem Trägerteil (13) herausgedrückt werden und daß jeweils eine Betätigungsvorrichtung (43,46) zum Zurückziehen des Andrückelementes vorgesehen ist.

5. Zentrier- und Spannsystem nach einem der Ansprüche 1 bis 4, dadurch gekennzeichnet, daß die Spannelemente (21) und die Andrückelemente (41) derart gesteuert sind, daß bei einem Spannvorgang zuerst die Andrückelemente (41) ausgefahren und dann die Spannelemente (21) zurückgezogen werden.

6. Zentrier- und Spannsystem nach einem der Ansprüche 2 bis 5, dadurch gekennzeichnet, daß die Andrückelemente (41) derart gesteuert sind, daß bei einem Zentriervorgang die Zentrierung zuerst an dem einzigen Zentrierelement (32c) und danach an den beiden entlang der einen Achse (38) angeordneten beiden Zentrierelemten (32a,32b) erfolgt.

7. Zentrier- und Spannsystem nach einem der Ansprüche 1 bis 6, dadurch gekennzeichnet, daß vier an den Ecken eines Rechtecks angeordnete Anlageflächen (30) oder Anlageflächenpaare vorgesehen sind.

8. Zentrier- und Spannsystem nach einem der Ansprüche 1 bis 7, dadurch gekennzeichnet, daß die entlang der einen Achse (38) angeordneten Führungsflächen (35) einen größeren Abstand von dem Mittelpunkt des Achsenkreuzes (40) haben, als die entlang der anderen Achse (39) verlaufende Führungsfläche (35).

## Claims

1. A centering and chucking system for machine tools for centering and chucking an interchangeable element (14) being of a tool or machining head or a workpiece pallet on a carrier member (13), comprising
- a plurality of chucking elements (21) provided at the carrier member (13) for pulling the interchangeable element (14) against the carrier member (13),
- a plurality of abutment surfaces (30) provided at the carrier member (13) for supporting the interchangeable element (14), and
- centering elements (32a, 32b, 32c) provided at the interchangeable element (14) and cooperating with plane guide surfaces (35) of guide elements (36, 37) of the carrier member (13) to position the interchangeable element (14) in the abutment plane (31) of both parts in two mutually rectangular directions such that a reference axis (20) of the interchangeable element (14) is coincident with a reference axis (19) of the carrier member (13),
**characterized in that**
each of the guide elements (36, 37) comprises a single guide surface (35) and that the guide surfaces (35) are arranged along a coordinate system (40), the center of which is situated on the reference axis (19) of the carrier member (13), and
that for each guide element (36, 37), there is provided a pressure element (41) adapted to be moved out of the carrier member (13) at right angles to the abutment surface (31) and acting via an oblique surface (33) on the centering element (32a, 32b, 32c) to urge the latter towards the guide surface (35).

2. Centering and chucking system according to claim 1, characterized in that along one axis (38) of the coordinate system (40), there are arranged two centering elements (32a, 32b), while one sole centering element (32c) is disposed along the other axis (39).

3. Centering and chucking system according to claim 1 or 2, characterized in that the chucking elements (21) are resiliently biased in the chucking direction and that a respective pressure-actuated operating means (22,23,25) is provided to release the chucking condition.

4. Centering and chucking system according to one of claims 1 to 3, characterized in that the pressure elements (41) are pressed out of the carrier member (13) with hydraulic assistance by springs and that a respective operating means (43,46) is provided for the withdrawal of the pressure element.

5. Centering and chucking system according to one of claims 1 to 4, characterized in that the chucking elements (21) and the pressure elements (41) are controlled such that, in case of a chucking operation, the pressure elements (41) are moved out first and the chucking elements (21) are withdrawn subsequently.

6. Centering and chucking system according to one of claims 2 to 5, characterized in that the pressure elements (41) are controlled such that, in case of a centering operation, centering is performed first at the sole centering element (32c) and subsequently at the two centering elements (32a, 32b) arranged along the one axis (38).

7. Centering and chucking system according to one of claims 1 to 6, characterized by the provision of four abutment surfaces (30) or pairs of abutment surfaces arranged at the four corners of a rectangle.

8. Centering and chucking system according to one of claims 1 to 7, characterized in that the guide surfaces (35) provided along the one axis (38) are spaced farther from the center of the coordinate system (40) than the guide surface (35) extending along the other axis (39).

## Revendications

1. Dispositif de centrage et de serrage pour des machines-outils, destiné à centrer et à fixer une partie échangeable (14) conçue sous la forme d'une tête d'outil ou d'usinage ou d'une palette porte-pièce sur une partie porteuse (13), comprenant plusieurs éléments de serrage (21) prévus sur la partie porteuse (13) pour tirer la partie échangeable (14) contre la partie porteuse (13), plusieurs surfaces d'appui (30) prévues sur la partie porteuse (13) pour supporter la partie échangeable (14), et des éléments de centrage (32a, 32b, 32c) qui sont prévus sur la partie échangeable (14), qui coopèrent avec des surfaces de guidage planes (35) d'éléments de guidage (36, 37) de la partie porteuse (13) et qui positionnent la partie échangeable (14) dans le plan d'appui (31) des deux parties dans deux directions perpendiculaires l'une à l'autre, de façon qu'un axe de référence (20) de la partie échangeable (14) coïncide avec un axe de référence (19) de la partie porteuse (13),
caractérisé en ce que les éléments de guidage (36, 37) comportent chacun une seule surface de guidage (35) et les surfaces de guidage (35) sont disposées le long d'un système d'axes en croix (40) dont le centre se trouve sur l'axe de référence (19) de la partie porteuse (13), et en ce que, à chaque élément de guidage (36, 37), est associé un élément de pression (41) qui peut sortir de la partie porteuse (13) perpendiculairement au plan d'appui (31), qui agit sur l'élément de centrage (32a, 32b, 32c) par l'intermédiaire d'une surface inclinée (33) et qui pousse cet élément de centrage contre la surface de guidage (35).

2. Dispositif de centrage et de serrage selon la revendication 1, caractérisé en ce que, le long de l'un des axes (38) du système d' axes en croix (40), sont montés deux éléments de centrage (32a, 32b) et, le long de l'autre axe (39), est monté un seul élément de centrage (32c).

3. Dispositif de centrage et de serrage selon la revendication 1 ou 2, caractérisé en ce que les éléments de serrage (21) sont soumis à une précontrainte élastique dans le sens de serrage, et en ce qu'il est prévu un dispositif d'actionnement sous pression (22, 23, 25) pour délivrer de l'état serré.

4. Dispositif de centrage et de serrage selon l'une des revendications 1 à 3, caractérisé en ce que les éléments de pression (41) sont poussés hydrauliquement hors de la partie porteuse (13) avec l'assistance de ressorts, et en ce qu'il est prévu un dispositif d'actionnement (43, 46) pour rentrer chaque élément de pression.

5. Dispositif de centrage et de serrage selon l'une des revendications 1 à 4, caractérisé en ce que les éléments de serrage (21) et les éléments de pression (41) sont commandés de façon que, lors d'une opération de serrage, les éléments de pression (41) soient d'abord sortis, puis les éléments de serrage (21) soient rentrés.

6. Dispositif de centrage et de serrage selon l'une des revendications 2 à 5, caractérisé en ce que les éléments de pression (41) sont commandés de façon que, lors d'une opération de centrage, le centrage s'effectue d'abord au niveau de l'élément de centrage unique (32c), puis au niveau des deux éléments de centrage (32a, 32b) implantés le long de l'un des axes (38).

7. Dispositif de centrage et de serrage selon l'une des revendications 1 à 6, caractérisé en ce qu'il est prévu quatre surfaces d'appui (30) ou paires de surfaces d'appui implantées dans les angles d'un rectangle.

8. Dispositif de centrage et de serrage selon l'une des revendications 1 à 7, caractérisé en ce que les surfaces de guidage (35) disposées le long de l'un (38) des axes sont plus éloignées du centre du système d'axes en croix (40) que les surfaces de guidage (35) situées le long de l'autre axe (39).
